# EUROPÄISCHE PATENTSCHRIFT

(11) **EP 2 855 074 B1**
(45) Veröffentlichungstag und Bekanntmachung des Hinweises auf die Patenterteilung: **19.10.2022**
(21) Anmeldenummer: 13733945.3
(22) Anmeldetag: 28.05.2013
(51) Int. Cl.: B23K 35/22, B23K 20/12

(54) **RÜHRREIBSCHWEISSWERKZEUG UND VERFAHREN ZUR HERSTELLUNG DESSELBEN**
FRICTION STIR WELDING TOOL AND METHOD FOR THE PRODUCTION THEREOF
OUTIL DE SOUDURE PAR FRICTION-MALAXAGE ET SON PROCÉDÉ DE PRODUCTION

(30) Priorität: 04.06.2012 DE 102012010916
(43) Veröffentlichungstag der Anmeldung: 08.04.2015
(73) Patentinhaber: Airbus Defence and Space GmbH, 82024 Taufkirchen (DE)
(72) Erfinder: SILVANUS, Jürgen, 82008 Unterhaching (DE); BRUNZEL, Tommy, 08393 Meerane (DE)
(74) Vertreter: Kastel, Stefan
(86) Internationale Anmeldenummer: PCT/DE2013/000286
(87) Internationale Veröffentlichungsnummer: WO 2013/182182

(56) Entgegenhaltungen:
- EP-A1- 1 882 543
- WO-A1-2011/074530
- WO-A2-2008/109649
- JP-A- 2003 326 372
- JP-A- 2004 082 144

## Beschreibung

Die Erfindung betrifft ein Schweißwerkzeug zum Verbinden von wenigstens zwei Werkstücken mittels Rührreibschweißen sowie ein Verfahren zur Herstellung eines solchen schweißwerkzeugs, siehe z.B. WO2008/109649 A.

Beim Rührreibschweißen wird im Gegensatz zum Reibschweißen die Reibenergie nicht durch Rotation eines der zu verbindenden Werkstücke relativ zu dem oder den anderen Werkstücken erzeugt, sondern es wird ein Schweißwerkzeug verwendet, das Rotationsenergie gleichzeitig auf die zu verbindenden Werkstücke aufbringt, wie dies beispielsweise in US 4423619 B beschrieben ist. Dabei laufen die folgenden Schritte ab:
Im ersten Schritt wird das Schweißwerkzeug mit einer rotierenden Sonde mit hoher Kraft zwischen die zu verbindenden Werkstücke gedrückt, bis eine die Sonde umschließende Schulter des Schweißwerkzeuges auf der Oberfläche der Werkstücke zur Anlage kommt.

Im zweiten Schritt verbleibt die sich drehende Sonde kurze Zeit an der Eintauchstelle, wobei sich der Bereich zwischen der Schulter des Schweißwerkzeuges und den Werkstücken bis kurz unter den Schmelzpunkt der Werkstücke erwärmt. Dabei wird der Werkstoff der Werkstücke weich und plastifiziert, so dass eine Vermischung zwischen den Materialien der zu verbindenden Werkstücke in einem Verbindungsbereich möglich wird.

Im dritten Schritt wird das Schweißwerkzeug in Vorschubrichtung bewegt, derart, dass die Schulter weiterhin mit großer Kraft auf die Werkstückoberflächen und die Sonde somit in den Verbindungsbereich gepresst wird. Es entsteht bei der Vorschubbewegung ein Druckunterschied zwischen dem Vorderbereich des Schweißwerkzeuges und seiner Rückseite durch die Drehbewegung der Sonde, so dass plastifizierter Werkstoff um die Sonde herum transportiert wird, sich vermischt und somit zur Schweißnahtbildung beiträgt.

Am Ende der Schweißnaht wird das Schweißwerkzeug aus dem Verbindungsbereich herausgezogen.

Sonden, die in solchen Schweißwerkzeugen verwendet werden, sind beispielsweise in US 2006/0065694 A1 oder US 7401723 B2 beschrieben.

DE 10 2005 060 178 B4 beschreibt ein Rührreib-Schweißwerkzeug mit formanpassbarer Schulter.

In DE 10 2009 040 526 A1 ist ein Rührreibschweißverfahren beschreiben, bei dem von einem Schweißwerkzeug mehrere Kräfte ausgeübt werden, um so die zu verbindenden Werkstücke nicht nur zu verbinden, sondern um während des Rührreibschweißens gleichzeitig einen versetzten Bauteilbereich zu bilden.

Bei einem in DE 10 2010 032 402 beschriebenen Rührreibschweißverfahren wird zum Überwinden eines großen Spaltes zwischen den zu verbindenden Werkstücken ein Deckblech auf die Stoßstelle der Werkstücke aufgebracht und später abgefräst.

DE 10 2004 030 381 B3 beschreibt ein Verfahren zur Online-Qualitätsüberprüfung beim Rührreibschweißen, wobei Prozessparameter wie Schwingungen der Sonde oder der Werkstücke überwacht werden.

Aus der JP 2004 082144 A und der JP 2003 326 372 A ist jeweils ein Rührreib-Schweißwerkzeug bekannt, welches eine Schulter und eine Sonde aufweist. Ein innerer Stützbereich des Schweißwerkzeuges ist aus einer hitzebeständigen Legierung gebildet, wobei die äußere Peripherie mit einer Keramik beschichtet ist. Ein weiteres Schweißwerkzeug mit einstückig ausgebildeter Schulter und Sonde ist aus der WO 2011/074530 A1 bekannt, wobei ein Basismaterial als Stützbereich aus Karbid vorgesehen ist, auf welchem eine Beschichtungsschicht aus einer chemischen Verbindung mit Aluminiumnitrit oder Aluminiumoxid und einem der Elemente Titan, Silizium, Zirkon, Hafnium und Chrom vorgesehen ist. Ein weiteres Rührreib-Schweißwerkzeug mit Sonde und Schulter ist aus der EP 1 882 543 A1 bekannt, wobei ein aus Si3N4 gebildetes Basismaterial mit Aluminiumnitrit beschichtet ist. Aus der WO 2008/109649 A2 ist ein Schweißwerkzeug zum Rührreibschweißen bekannt, welches eine Sonde aufweist, die aus einem hohlen Stift gebildet ist, in dem ein inneres Spannelement vorgesehen ist. Es wird als Wesentlich angesehen, dass das Spannelement zwar den Stift verspannt, jedoch davon entkoppelt ist, um die Übertragung von Torsionskräften zwischen Stift und Spannelement zu vermeiden.

Beim Rührreibschweißen bewirkt die Reibungswärme nicht nur das Plastifizieren der zu verbindenden Werkstücke, sondern erhitzt auch die Sonde selbst auf Arbeitstemperatur, zumeist etwa 500° C.

Die bislang bekannten Sonden sind aus zumeist warmfesten metallischen Materialien gefertigt, um die Reibungswärme leicht auf die zu verbindenden Werkstücke übertragen zu können. Problematisch ist dabei, dass solche Sonden auf von außen wirkende Kräfte oder Momente unter Verbiegung reagieren und somit schnell unbrauchbar werden.

Dem Phänomen der Verbiegung kann dadurch begegnet werden, dass eine dickere Sonde verwendet wird, was jedoch dem Bedürfnis entgegensteht, schlanke Sonden für schmale Schweißnähte zur verwenden.

Aufgabe der Erfindung ist es ein Schweißwerkzeug zum Verbinden von wenigstens zwei Werkstücken mittels Rührreibschweißen zu schaffen, dessen Reibsonde gegen Verbiegung beim Reibvorgang geschützt ist.

Diese Aufgabe wird durch das Schweißwerkzeug mit den Merkmalen des Anspruches 1 gelöst.

Ein Verfahren zur Herstellung eines solchen Schweißwerkzeuges ist Gegenstand des Nebenanspruches.

Vorteilhafte Ausgestaltungen der Erfindung sind Gegenstand der Unteransprüche. Ein Schweißwerkzeug zum Verbinden von wenigstens zwei Werkstücken mittels Rührreibschweißen weist eine Sonde zum Aufbringen von Reibungswärme auf die Werkstücke auf, wobei die Sonde einen aus einem ersten Werkstoff gebildeten ersten Sondenbereich und einen aus einem zweiten Werkstoff gebildeten zweiten Sondenbereich umfasst.

Ist der erste Werkstoff dabei unterschiedlich zu dem zweiten Werkstoff, können Eigenschaften der Sonde erreicht werden, die durch Verwendung eines einzigen Materials nicht erzielt werden können. So kann beispielsweise einer der beiden Werkstoffe die Sonde gegen Verbiegung stabilisieren, während der andere Werkstoff einen guten Reibkoeffizient zur Generierung von Reibungswärme in Kontakt mit den zu verbindenden Werkstücke aufweist.

Erfindungsgemäß weist daher der erste Sondenbereich einen Stützbereich zum Abstützen der Sonde während des Rührreibschweißens auf. Weiter weist der zweite Sondenbereich einen Reibbereich, insbesondere eine Reibfläche, zum Aufbringen von Reibungswärme auf die Werkstücke auf. Weiter weist der erste Werkstoff einen höheren E-Modul als der zweite Werkstoff auf und ist höherfest. Somit bildet der erste Werkstoff vorzugsweise einen Widerstand gegen Einwirkung äußerer Kräfte und Momente und trägt daher vorteilhaft dazu bei, dass die Sonde sich weniger verbiegt. Erfindungsgemäß ist der erste Sondenbereich (24) in einer sackförmigen Ausnehmung (56) des zweiten Sondenbereichs (26) angeordnet, und der erste (24) und der zweite Sondenbereich (26) sind formschlüssig und/oder durch Diffusion der beiden Werkstoffe (28, 30) aneinander gehalten.

Die Sonde ist somit aus wenigstens zwei verschiedenen Materialien zum Beispiel als Werkstoffverbund hergestellt.

Besonders bevorzugt ist der zweite Werkstoff wärmeleitend, um so bevorzugt effektiv Reibungswärme auf die zu verbindenden Werkstücke aufbringen zu können.

Vorzugsweise ist der erste Werkstoff mit Keramik, insbesondere mit SbN₄-Y2O3 oder Zr02-Y203, gebildet. Keramiken sind im Allgemeinen auch bei sehr hohen Temperaturen, d.h vorzugsweise bis zu 2000 °C, formbeständig und hart und können somit von außen wirkenden Kräften und Momenten vorzugsweise eine gute Widerstandskraft entgegensetzen.

Bevorzugt ist der zweite Werkstoff metallisch und umfasst insbesondere einen metallischen Werkstoff, bevorzugt MP 159. Durch den metallischen Charakter wird vorzugsweise ein wärmeleitender zweiter Werkstoff bereitgestellt, der die Reibungswärme vorzugsweise in Kontakt mit den zu verbindenden Werkstücken aufbringen kann. Es ist bevorzugt, einen metallischen Werkstoffverbund zu verwenden, da hier vorteilhaft Eigenschaften des zweiten Werkstoffes weiter feinangepasst werden können.

Beispiele für geeignete Werkstoffe sind Nickel-Kobalt-Verbindungen, Inconell, Triebwerkstoffe, Nickelverbindungen, Kobaltverbindung, MP 159, TSP 1, Warmarbeitsstähle oder Schnellarbeitsstähle. Besonders bevorzugt ist hier MP 159, eine Legierung mit vorzugsweise hoher Leitfähigkeit und bevorzugt hoher Steifigkeit, das beispielsweise bei Raumtemperatur einen E-Model von etwa 243 GPa und z.B. bei etwa 500 OC einen E-Modul von etwa 206 GPa aufweist.

In einer besonderen Ausgestaltung weist der erste Werkstoff einen höheren Wärmeausdehnungskoeffizienten auf als der zweite Werkstoff. So expandiert vorzugsweise der erste Werkstoff bei Betriebstemperatur und erzeugt bevorzugt eine radiale Kraft nach außen auf den zweiten Werkstoff, so dass dieser vorzugsweise besonders stark stabilisiert wird. Dann können beispielsweise auch Materialien wie Leichtmetalle, Aluminium bzw. Stahl für den zweiten Werkstoff verwendet werden.

Die Sonde erstreckt sich bevorzugt entlang einer Längsachse des Schweißwerkzeuges, wobei eine die Sonde umschließende Schulter zum Abtrennen eines Verbindungsbereiches der Werkstücke von einer Umgebung vorgesehen ist. Die Sonde ist vorteilhaft antreibbar zum Rotieren um die Längsachse gelagert. Die die Sonde umschließende Schulter kann alternativ fest stehen oder ebenfalls um die Längsachse rotieren. Weiter kann die Schulter vorzugsweise als Formwerkzeug für den Verbindungsbereich vorgesehen sein bzw. entlang der Längsachse beweglich sein.

Um vorzugsweise eine Benetzung der die Sonde umschließenden Schulter mit plastifiziertem Material der Werkstücke zu vermeiden, weist die Schulter vorzugsweise eine Diamantbeschichtung oder Keramikbeschichtung, insbesondere in dem Bereich, der mit den Werkstücken in Kontakt kommt, auf.

Vorteilhaft sind der erste und der zweite Sondenbereich rotationssymmetrisch um eine Längsachse angeordnet. So wirkt während der Rotation der Sonde vorzugsweise permanent eine Widerstandskraft gegen jegliche von außen wirkenden Kräfte und Momente, unabhängig von der Richtung, aus der sie auf die Sonde eingebracht werden.

Der erste Sondenbereich kann sich vorzugsweise entlang der gesamten Längsachse der Sonde erstrecken oder alternativ in einem Teilbereich entlang der Längsachse. So kann alternativ vorzugsweise entweder die gesamte Sondenlänge stabilisiert werden oder Material- und Herstellungskosten eingespart werden, indem lediglich vorzugsweise ein Teilbereich der Sonde stabilisiert ist. Ist lediglich ein Teilbereich stabilisiert, ist es bevorzugt, den Teilbereich zu stabilisieren, in dem die höchste Biegebelastung während des Rührreibschweißens zu erwarten ist.

Besonders bevorzugt ist der E-Modul des ersten Werkstoffes um 20 % bis 50 % höher als der E-Modul des zweiten Werkstoffes. In besonders bevorzugter Ausgestaltung können mehrere erste Sondenbereiche vorgesehen sein, um beispielsweise mehrere Teilbereiche der Sonde gegen Verbiegung zu stabilisieren.

Sind mehrere erste Sondenbereiche vorgesehen, sind diese vorteilhaft ebenfalls symmetrisch um die Längsachse des Schweißwerkzeuges angeordnet.

Die Sonde weist vorzugsweise eine größere Längs-Erstreckungslänge als einen Durchmesser auf und hat somit vorzugsweise eine schlanke Gestalt. Die Sonde ist somit vorteilhafterweise länger als dick. Beispielsweise kann die Sonde eine Längs-Erstreckungslänge von 20 mm bis 60 mm haben, während der Außendurchmesser bevorzugt in einer Größenordnung von etwa 4 mm bis 8 mm liegt. Beispielsweise hat eine in der Sonde eingebrachte Bohrung, in die z.B. die Keramik eingefügt wird, einen Durchmesser von etwa 2 mm bis 4mm. So können vorteilhaft stabile und dennoch schmale Schweißnähte in einem Verbindungsbereich der zu verbindenden Werkstücke hergestellt werden. Vorteilhaft sind die Sonde bzw. der erste Sondenbereich bzw. der zweite Sondenbereich konisch ausgebildet. Alternativ können die Sonde bzw. der erste Sondenbereich bzw. der zweite Sondenbereich auch zylinderförmig ausgebildet sein. Es ist auch möglich, dass der erste Sondenbereich konisch und der zweite Sondenbereich zylinderförmig ausgebildet ist und umgekehrt.

Vorteilhaft weist die Sonde eine Mehrkant-Außengeometrie, beispielsweise eine Sechskant-Außengeometrie, und/oder ein Außengewinde auf. Erfindungsgemäß sind der erste und der zweite Sondenbereich formschlüssig aneinander gehalten. Zusätzlich oder alternativ können der erste und der zweite Sondenbereich auch durch Diffusion der beiden Werkstoffe aneinander gehalten sein. So kann vorteilhaft eine besonders enge Verbindung der beiden aus unterschiedlichen Werkstoffen gebildeten Sondenbereiche erzeugt werden.

Beispielsweise kann der erste Sondenbereich eine Riffelung und/oder eine Einkerbungen und/oder eine Wellenform und/oder eine anders geartete Konturierung aufweisen. Dabei weist der zweite Sondenbereich vorteilhaft eine entsprechende Gegenform auf und bildet so vorteilhaft mit dem ersten Sondenbereich einen Formschluss.

Erfindungsgemäß sind auch der erste und der zweite Werkstoff in einem Diffusionsbereich der Sonde ineinander diffundiert und so stoffschlüssig aneinander gehalten.

Bei einem Verfahren zur Herstellung eines Rührreib-Schweißwerkzeugs werden zunächst ein erster Werkstoff und ein zweiter Werkstoff bereitgestellt und daraus eine Sonde gebildet, wobei der erste Werkstoff in eine sackförmige Ausnehmung (56) des zweiten Werkstoffs (30) eingebracht wird und die Sonde (16) aus den beiden verschiedenen Materialien als Werkstoffverbund hergestellt wird, bei dem der erste (24) und der zweite Sondenbereich (26) formschlüssig und/oder durch Diffusion der beiden Werkstoffe (28, 30) aneinander gehalten sind.

Vorteilhaft wird beim Bilden der Sonde zunächst der zweite Werkstoff erhitzt, der erste Werkstoff mit diesem erhitzten zweiten Werkstoff umschlossen und dann die beiden Werkstoffe gemeinsam abgekühlt.

Vorteilhaft wird der erste Werkstoff vorgeformt, insbesondere indem eine Konturierung und/oder eine Riffelung und/oder Einkerbungen und/oder eine Wellenform gebildet wird.

In besonders bevorzugter Ausgestaltung wird die gebildete Sonde mit erhöhtem Druck und/oder mit erhöhter Temperatur beaufschlagt, so dass durch den Temperatur- bzw. Druckeinfluss das erste Material und das zweite Material vorteilhaft ineinander diffundieren.

Bevorzugte Ausgestaltungen der Erfindung werden nachfolgend anhand der beigefügten Zeichnungen näher erläutert. Darin zeigt:
- Fig. 1: ein Schweißwerkzeug zum Rührreibschweißen;
- Fig. 2: eine vergrößerte Teilansicht des Schweißwerkzeuges aus Fig. 1;
- Fig. 3: eine erste Ausführungsform einer Sonde für das Schweißwerkzeug aus Fig. 1;
- Fig. 4: eine zweite Ausführungsform einer Sonde für das Schweißwerkzeug aus Fig. 1;
- Fig. 5: eine dritte Ausführungsform einer Sonde für das Schweißwerkzeug aus Fig. 1;
- Fig. 6: eine vierte Ausführungsform einer Sonde für das Schweißwerkzeug aus Fig. 1;
- Fig. 7: eine Sonde für das Schweißwerkzeug aus Fig. 1 mit einer ersten Außengeometrie entlang einer Längsachse der Sonde;
- Fig. 8: eine Sonde für das Schweißwerkzeug aus Fig. 1 mit einer zweiten Außengeometrie entlang der Längsachse der Sonde,
- Fig. 9: eine Sonde für das Schweißwerkzeug aus Fig. 1 mit Außengewinde;
- Fig. 10: eine erste Querschnittsgeometrie einer Sonde für das Schweißwerkzeug aus Fig. 1;
- Fig. 11: eine zweite Querschnittsgeometrie der Sonde für das Schweißwerkzeug aus Fig. 1;
- Fig. 12: eine wellenförmige Formschluss-Verbindung zwischen einem ersten Sondenbereich und einem zweiten Sondenbereich der Sonde aus Fig. 3 bis Fig. 11;
- Fig. 13: eine zickzackförmige Formschluss-Verbindung zwischen dem ersten Sondenbereich und dem zweiten Sondenbereich;
- Fig. 14: eine Formschlussverbindung zwischen erstem und zweitem Sondenbereich mit Einkerbungen; und
- Fig. 15: eine Sonde, wobei Werkstoff aus dem ersten Son9enbereich in den zweiten Sondenbereich diffundiert ist und umgekehrt.

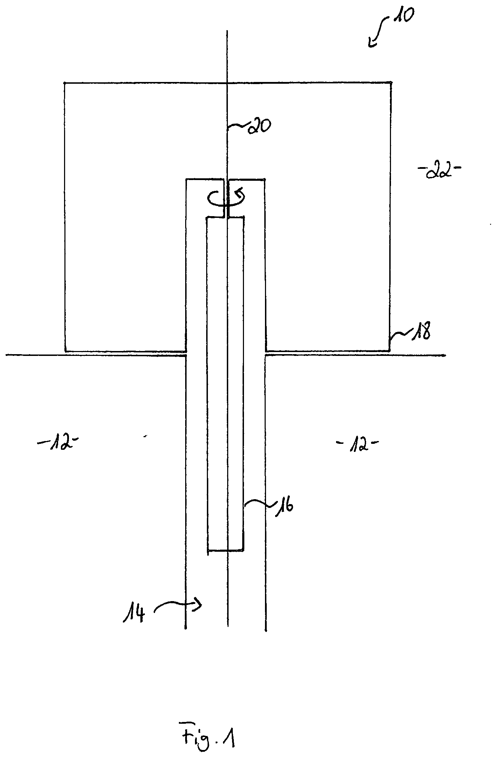

Fig. 1 zeigt ein Schweißwerkzeug 10 zum Rührreibschweißen, mit dem zwei Werkstücke 12 durch Verschweißen in einem Verbindungsbereich 14 miteinander verbunden werden können.

Das Schweißwerkzeug 10 weist eine Sonde 16 sowie eine die Sonde 16 umgebende Schulter 18 auf. Die Sonde 16 ist um eine Längsachse 20 rotierbar gelagert und erstreckt sich entlang der Längsachse 20 in den Verbindungsbereich 14 der beiden Werkstücke 12. Durch die Rotation der Sonde 16 wird Reibungswärme auf die Werkstücke 12 aufgebracht, so dass das Material der Werkstücke 12 plastifiziert, um die Sonde 16 geschleudert wird und so eine nicht gezeigte Schweißnaht gebildet wird. Die Schulter 18 trennt den Verbindungsbereich 14 sowie die Sonde 16 von einer Umgebung 22 ab und verhindert so beispielsweise eine nachteilige Wechselwirkung des in der Umgebungsluft vorhandenen Sauerstoffs mit den plastifizierten Materialien der Werkstücke 12 oder mit der Oberfläche der Sonde 16.

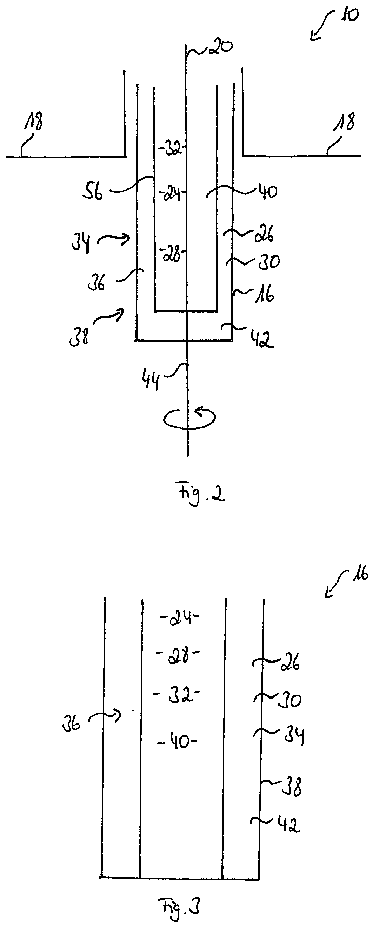

Fig. 2 zeigt eine Detailansicht auf die Sonde 16 aus Fig. 1. Die Sonde 16 weist einen ersten Sondenbereich 24 und einen zweiten Sondenbereich 26 auf. Der erste Sondenbereich 24 ist aus einem ersten Werkstoff 28 gebildet und der zweite Sondenbereich 26 ist aus einem zweiten Werkstoff 30 gebildet. Dabei ist der erste Werkstoff 28 so gewählt, dass der erste Sondenbereich 24 einen Stützbereich 32 bildet, um so die Sonde 16 gegen von außen wirkende Kräfte bzw. Momente und somit gegen Verbiegung zu stabilisieren.

Der zweite Werkstoff 30 ist so gewählt, dass der zweite Sondenbereich 26 einen Reibbereich 34 aufweist, der Reibungswärme auf die Werkstücke 12 aufbringt, um diese so in dem Verbindungsbereich 14 zu plastifizieren. Insbesondere ist der zweite Werkstoff 30 an einer Außenfläche 36 der Sonde 16 angeordnet und bildet so eine Reibfläche 38.

Der E-Modul des ersten Werkstoffes 28 ist höher als der E-Modul des zweiten Werkstoffes 30, bevorzugt ist hierbei ein Unterschied von 20% bis 50%. Damit ist der erste Werkstoff 28 höherfest als der zweite Werkstoff 30. Um ein Aufschmelzen des zweiten Werkstoffes 30 unter Betriebstemperatur, etwa 500°C, zu vermeiden, ist der zweite Werkstoff 30 warm- bzw. zähfest und ist außerdem wärmeleitend.

Der erste Werkstoff 28 ist mit einer Keramik 40 gebildet, beispielsweise mit SbN4-y20₃. Der zweite Werkstoff 30 umfasst einen metallischen Werkstoffverbund 42, beispielsweise MP 159.

Bevorzugt weist der erste Werkstoff 28 zusätzlich einen höheren Wärmeausdehnungskoeffizienten auf als der zweite Werkstoff 30, sodass er sich unter Betriebstemperatur stärker ausdehnt als der zweite Werkstoff 30 und dabei besonders gut die Sonde 16 stabilisiert

Fig. 3 bis Fig. 6 zeigen verschiedene Ausführungsformen der Sonde 16 mit den beiden Sondenbereichen 24, 26.

In einer ersten Ausführungsform, gezeigt in Fig. 3, ist der erste Sondenbereich 24 innerhalb des zweiten Sondenbereiches 26 angeordnet.

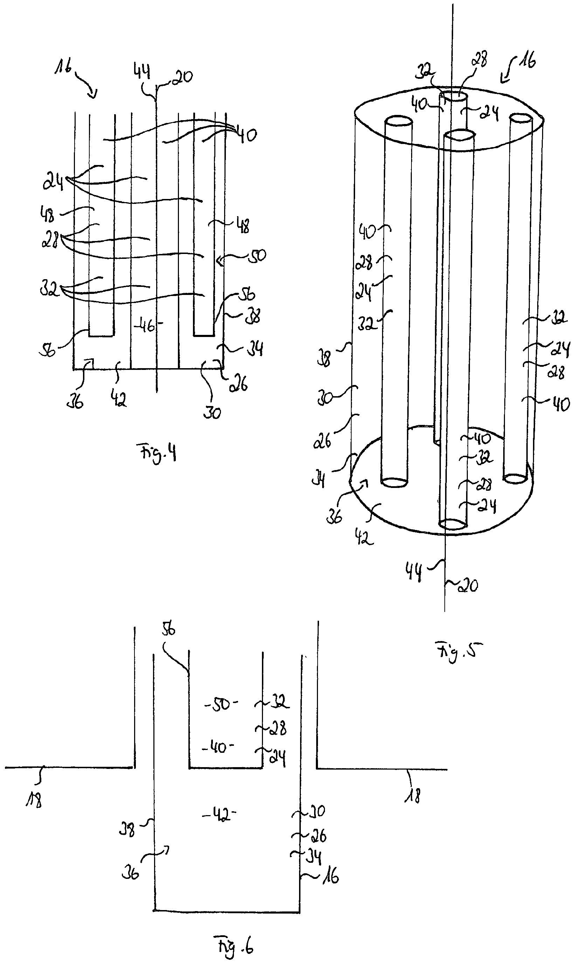

In einer zweiten Ausführungsform, gezeigt in Fig. 4, sind mehrere erste Sondenbereiche 24 in der Sonde 16 vorgesehen. Dabei ist entlang einer Mittelachse 44 der Sonde 16 ein erster Teilsondenbereich 46 angeordnet, der sich über die gesamte Länge der Sonde 16 erstreckt. Beabstandet zu dem ersten Teilsondenbereich 46 sind zwei bzw. vier zweite Teilsondenbereiche 48 angeordnet, die sich nur über einen Teilbereich 50 der Längsachse 20 der Sonde 16 erstrecken. So kann für eine besondere Stabilisierung im Teilbereich 50 der Sonde 16 gesorgt werden.

Eine dritte Ausführungsform der Sonde 16, gezeigt in Fig. 5, zeigt eine Anordnung von vier symmetrisch um die Längsachse 20 angeordneten ersten Teilsondenbereichen 46, die sich über die gesamte Länge der Sonde 16 erstrecken.

In einer vierten Ausführungsform der Sonde, gezeigt in Fig. 6, ist der erste Sondenbereich 24 lediglich im oberen Teilbereich 50 der Sonde 16 angeordnet, und zwar dort, wo die Sonde 16 unter Prozessbedingungen an die Schulter 18 anschlagen könnte. So wird lediglich in diesem Bereich ein Verbiegungsschutz vorgesehen, um so Material- und Herstellungskosten einsparen zu können.

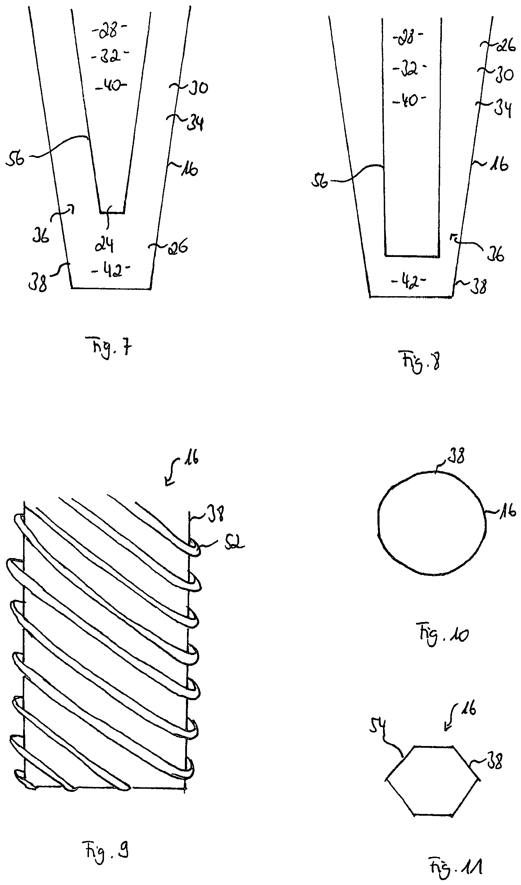

Fig. 7 bis Fig. 11 zeigen verschiedene Außengeometrien der Sonde 16, die in dem Schweißwerkzeug 10 verwendet werden können.

Fig. 7 zeigt eine Ausführungsform, bei der sowohl der erste Sondenbereich 24 als auch der zweite Sondenbereich 26 konisch ausgebildet sind, und somit auch die Sonde 16 konisch ausgebildet ist.

Bei der Ausführungsform in Fig. 8 ist der erste Sondenbereich 24 zylindrisch ausgebildet, während der zweite Sondenbereich 26 und somit die Außengeometrie der Sonde 16 konisch gebildet ist.

Fig. 9 zeigt eine Ausführungsform, bei der die Sonde 16 ein Außengewinde 52 aufweist.

Fig. 10 und Fig. 11 zeigen Querschnittsgeometrien der Sonde 16. Bei der Ausführungsform in Fig. 10 ist die Sonde 16 rund ausgebildet, während sie bei der Ausführungsform in Fig. 11 eine Mehrkant-Außengeometrie 54 aufweist.

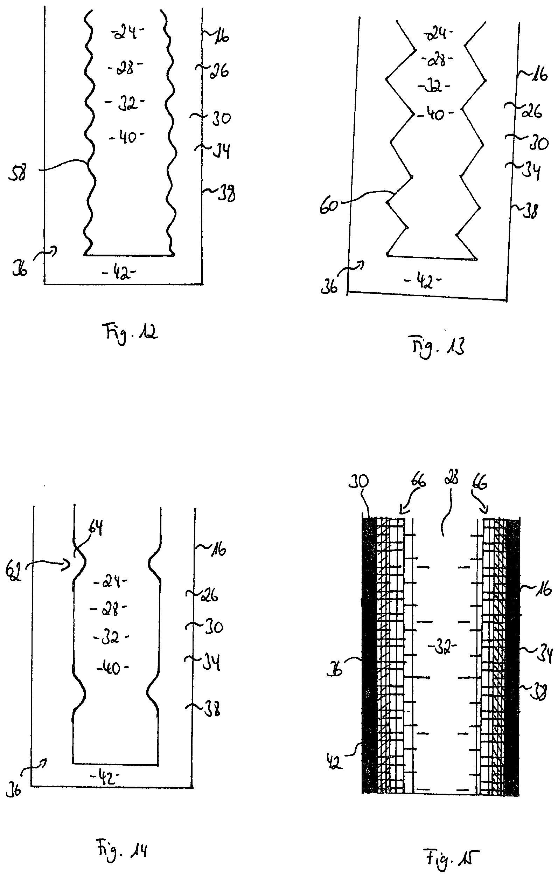

Fig. 12 bis Fig. 15 zeigen Ausführungsformen, bei denen der erste und der zweite Sondenbereich 24, 26 form- und/oder stoffschlüssig aneinander gehalten sind. Dabei ist der erste Sondenbereich 24 in eine sackförmige Ausnehmung 56 des zweiten Sondenbereiches 26 eingebracht.

In einer ersten Ausführungsform einer formschlüssigen Verbindung der beiden Sondenbereiche 24, 26, gezeigt in Fig. 12, ist eine Wellenform 58 der beiden Sondenbereiche 24, 26 vorgesehen.

Bei einer zweiten Ausführungsform, gezeigt in Fig. 13, ist statt der Wellenform 58 eine Zickzack-Form 60 vorgesehen.

Eine weitere Ausführungsform, gezeigt in Fig. 14, weist Einkerbungen 62 in dem ersten Sondenbereich 24 auf, in den Vorsprünge 64 des zweiten Sondenbereiches 26 eingreifen.

In Fig. 15 ist gezeigt, dass durch Diffusion des ersten Werkstoffes 28 in den zweiten Werkstoff 30 und umgekehrt in einem Diffusionsbereich 66 ein Stoffschluss der beiden Sondenbereiche 24, 26 hergestellt werden kann.

Um die oben beschriebene Sonde 16 herzustellen, werden die beiden Werkstoffe 28, 30 bereitgestellt und die Sonde 16 gebildet, indem der erste Werkstoff 28 in den zweiten Werkstoff 30 eingebracht wird.

Dies kann dadurch geschehen, dass zunächst der zweite Werkstoff 30 erhitzt wird, mit diesem erhitzten zweiten Werkstoff 30 der erste Werkstoff 28 umschlossen wird, und dann die beiden Werkstoffe 28, 30 gemeinsam abgekühlt werden, um so die Sonde 16 zu bilden. Die Werkstoffe 28, 30 können auch wie in Fig. 12 bis Fig. 14 gezeigt vorgeformt werden, um so einen Formschluss bilden zu können. Nach Einbringen des ersten Werkstoffes 28 in den zweiten Werkstoff 30 kann die Sonde 16 noch mit Druck bzw. Temperatur beaufschlagt werden, um so ein Diffusionsprofil wie in Fig. 15 gezeigt zu erzeugen.

Die gezeigten Ausführungsformen der Sonde 16, d.h. die Außengeometrie in Längserstreckung bzw. die Querschnitts-Außengeometrie, das Vorhandensein eines Außengewindes 52, das Vorsehen eines oder mehrerer erster Sondenbereiche 24, die Erstreckung der ersten Sondenbereiche 24 entlang der gesamten Länge der Sonde 16 oder nur in einem Teilbereich 50 der Sonde 16, können alternativ oder in Kombination miteinander vorgesehen sein. Zusätzlich kann auch der Formschluss des ersten und zweiten Sondenbereiches 24, 26 durch eine Kombination der in Fig. 12 bis Fig. 14 gezeigten Möglichkeiten erfolgen. Andere Konturierungsmöglichkeiten sind ebenfalls denkbar.

Aufgrund ungenügender Haltbarkeit bzw. Standzeit von Schweißwerkzeugen 10 im industriellen Einsatz wird ein verbessertes Schweißwerkzeug 10 vorgeschlagen.

Bislang sind Schweißwerkzeuge 10 nur innerhalb bestimmter Anwendungsspektren tauglich, sind jedoch darüber hinaus weniger geeignet, beispielsweise gilt dies für funktional andere Schweißwerkzeugvarianten.

Daher sollen nun die Potentiale eines Werkstoffverbundes bestehend aus einer äußeren Hülle, dem zweiten Sondenbereich 26, beispielsweise in Sack-Geometrie, und einem inneren Stab, dem ersten Sondenbereich 24, genutzt werden, wobei die beiden Sondenbereiche 24, 26 miteinander verbunden werden. Die Geometrien können auch konisch sein.

Die äußere Hülle mit den maximalen Biegespannungen im Einsatz ist warm- bzw. zähfest bzw. wärmeleitend, der innere Stab ist höherfest und weist einen höheren E-Modul auf. Die Leitfähigkeit kann über die Werkstoffwahl eingestellt werden. So entsteht ein Schweißwerkzeug 10 mit einer höheren Belastbarkeit, einer längeren Haltbarkeit, einer geringeren elastischen Verbiegung und dem Potential, die Sonde 16 schlanker zu gestalten.

Ein möglicher Herstellungsweg des Verbundes ist Fügen mittels Schrumpfen.

Die Standzeit gibt an, wie lange die Sonde 16 benutzt werden kann, beispielsweise beim Schweißen von langen Nähten hält die Sonde z.B. 500 min.

Die Haltbarkeit hängt ab von der Nutzung, beispielsweise bei Nutzung für mehrfache und unterschiedliche Schweißnähte, je nach Länge der Nähte, je nach Dicke der Bleche bzw. bei der Nutzung für Schweißnähte gleicher Art.

Die Belastbarkeit ist das Verhalten der Sonde 16 unter Einwirkung äußerer Kräfte, Momente und Temperatur, die abhängig sind von dem zu schweißenden Material.

Das technische Problem ist, eine Sonde 16 anzugeben, die eine geringere Verformung unter Prozesslast hat als bislang bekannt, d.h. wobei das Phänomen der Verbiegung verhindert wird. Dies ist bislang durch Verwendung einer dicken Sonde 16 realisiert. Es wird nun ein anderer Ansatz gewählt, in dem die Sonde 16 versteift wird.

Es gibt Werkstoffe, mit denen versucht wird, dem oberem Problem zu begegnen, beispielsweise beschrieben in US 7401723 B2 für Sonden 16 mit freiem Ende und einer Schulter 18. Ein solcher Werkstoff ist beispielsweise MP 159, der beispielsweise auch bei Warmtest-Verschraubung im Kraftfahrzeugbau benutzt wird. Für ein Werkzeug mit doppelter Schulter 18, sog. bobbin-tool oder selfreacting tool, beispielsweise beschrieben in US 2006065694 A1, wird die Belastung der Sonde 16 durch Mitdrehung der unteren Schulter 18 geringer, jedoch ist dies nur anwendbar für Schweißnähte mit einer Länge von wenigen Zentimetern. Somit ist ein solches Schweißwerkzeug 10 nicht für die industrielle Anwendung geeignet. Bislang werden Sonden 16 nur aus einem Material bzw. einer Legierung gefertigt.

Von diesem Konzept wird nun abgewichen, indem die Sonde 16 aus zwei verschiedenen Materialien als Werkstoffverbund hergestellt wird.

Es eignet sich nicht jedes Material als Sonde für alle Anwendungen, d.h. für lange oder kurze Schweißnähte bzw. für dicke oder dünne Bleche.

Als Innenmaterial für den ersten Sondenbereich 24 wird nun eine Keramik 40 verwendet, beispielsweise SbN₄-Y20₃. Dieses hat sowohl bei Raumtemperatur als auch bei einer Betriebstemperatur von etwa 500°C einen E-Modul von etwa 310 GPa.

Als Außenmaterial kommen in Frage: MP 159, TSP 1, NiCo-Verbindungen wie Inconel oder Triebwerkstoffe, Nickel-Verbindungen und/oder Kobalt-Verbindungen, kostengünstiger Werkzeugstahl wie Warmarbeitsstahl oder SchnellarbeitsstahL

Die Eigenschaften des Innenmaterials bei Betriebstemperatur sind etwa wie bei Aluminium oder Magnesium.

MP159 ist ein teures und schlecht verfügbares Material, so dass hier abgewägt werden muss, ob eines der anderen genannten Materialien die Anforderungen zumindest annähernd ebenfalls erfüllen kann. Inconel ist weicher als MP 159, kostengünstige Werkzeugstähle wie Warmarbeitsstahl 1.2344 oder Schnellarbeitsstahl 1.3343 sind ebenfalls kostengünstigere Alternativen zu MP 159. Die Eigenschaften der Sonde 16 bleiben wie bisher, sie ist nämlich warmfest bei Betriebstemperatur und hat somit bessere bzw. gleiche Eigenschaften wie bei Raumtemperatur und ist gleichzeitig zähfest, hat somit bei Arbeitstemperatur eine hohe Bruchdehnung, so dasstrotzeines Risses die Sonde 16 weiterverwendbar ist. Weiter hat das Außenmaterial einen metallischen Charakter mit einem hohen Reibkoeffizient Bevorzugt werden dabei metallische Werkstoffverbunde 42, da diese eine bessere Wärmeabfuhr haben.

Eine derart beschriebene Sonde 16 widersteht höheren äußeren Kräften.

Es ist auch vorstellbar, mindestens zwei Materialien zu verwenden, wobei das Außenmaterial wie oben beschrieben ausgebildet ist und das Innenmaterial einen höheren Wärmeausdehnungskoeffizienten hat als das Außenmaterial. Somit expandiert es bei Betriebstemperatur und erzeugt eine radiale Kraft nach außen. Hier sind beispielsweise Materialien wie Leichtmetalle, Aluminium und Stahl verwendbar.

Bei der Herstellung der Sonde 16 wird entweder ein Aufschrumpf-Verfahren gewählt, wobei der äußere warme Teil über den beispielsweise keramischen Teil gestülpt wird und beide zusammen abgekühlt werden. Alternativ kann durch generative Fertigung, d.h. Rapid Prototyping oder Additive Layer Manufacturing oder ähnliches die Sonde 16 hergestellt werden.

Eine konische Form der Sonde 16 hat den Vorteil eines hohen Biegemoments bei größerem Querschnitt, eines besseren Wärmeflusses von unten nach oben durch die Sonde 16 und einer einfachen Herstellung. Es ist jedoch eine zylindrischkonische Form denkbar, auch mit Konturierung der Sonde 16, beispielsweise als Sechskant, mit Gewinde 52 usw. Um das Innenteil mit dem Außenteil zu verbinden, kann ein Formschluss vorgesehen sein, in dem eine Riffelung, ein Kerbarm, Wellen, eine sanfte Konturierung vorgesehen wird, wobei das Außenteil mit Räumnadeln für die Verbindung mit dem Innenteil bearbeitet wird. Alternativ oder zusätzlich kann noch ein Stoffschluss vorgesehen sein, bei dem durch Temperatur bzw. Druck eine Diffusion zwischen dem Außenteil und dem Innenteil bewirkt wird.

Es können auch multiple Innenteile symmetrisch angeordnet sein, beispielsweise vier gleichlange Innenteile oder ein langes Innenteil, das sich durch die gesamte Sonde 16 erstreckt, oder zwei bzw. vier kürzere Innenteile im oberen Bereich der Sonde 16 zur Verstärkung an der Stelle mit der höchsten Belastung. Beispielsweise muss eine Keramikverstärkung mindestens die Tiefe bzw. Stelle in der Sonde 16 erfassen, die im Schweißprozess die höchste Biegebelastung erfährt.

Kostengünstiges Außenmaterial und Keramik 40 als Innenteil führen zu einer Sonde 16 mit Eigenschaften wie bisher bekannten Sonden 16 bzw. Monolith. Das Außenmaterial kann dabei aus Warmarbeitsstählen, sog. "hot work tool steel", oder Schnellarbeitsstählen wie TSP 1, sog. "high speed steel", sein.

Dadurch ist es möglich, schlankere Sonden 16 im Vergleich zu bislang bekannten Sonden 16 zu erzeugen. Dies ist vorteilhaft beispielsweise beim Plattenschweißen. Es gibt die Möglichkeit der Anpassung der Gestaltung, indem nicht wie bisher bekannt die höhere Belastbarkeit zur Verlängerung der Standzeit genutzt wird, sondern zur Verschlankung des Durchmessers. Ein weiterer Vorteil ist die Verringerung der Prozesskräfte, d.h. der beim Vorschub bzw. einer vertikal wirkenden Kraft, da eine kleinere Sonde 16 zu einer kleineren Schulter 18 führt und somit insgesamt zu verringerten Prozesskräften.

Es wird somit eine Hybrid-Sonde 16 vorgeschlagen, die einen ersten Sondenbereich 24 aufweist, der warm- und/oder zähfest ist, beispielsweise aus Metall, und die einen zweiten Sondenbereich 26 aufweist, der hochfest ist und ein hohes E-Modul hat, beispielsweise eine Keramik 40. Alternativ kann ein Leichtmetall verwendet werden, das bei einwirkender Prozesswärme expandiert. Somit widersteht die Sonde 16 höheren äußeren Kräften, hat eine höhere Belastbarkeit, eine längere Haltbarkeit, kann schlanker ausgebildet werden und hat zusätzlich einen geringeren Verzug.

### Bezugszeichenliste

- 10: Schweißwerkzeug
- 12: Werkstück
- 14: Verbindungsbereich
- 16: Sonde
- 18: Schulter
- 20: Längsachse
- 22: Umgebung
- 24: erster Sondenbereich
- 26: zweiter Sondenbereich
- 28: erster Werkstoff
- 30: zweiter Werkstoff
- 32: Stützbereich
- 34: Reibbereich
- 36: Außenfläche
- 38: Reibfläche
- 40: Keramik
- 42: Werkstoffverbund
- 44: Mittelachse
- 46: erster Teilsondenbereich
- 48: zweiter Teilsondenbereich
- 50: Teilbereich
- 52: Außengewinde
- 54: Mehrkant-Außengeometrie
- 56: sackförmige Ausnehmung
- 58: Wellenform
- 60: Zickzack-Form
- 62: Einkerbung
- 64: Vorsprung
- 66: Diffusionsbereich

## Patentansprüche

1. Schweißwerkzeug (10) zum Verbinden von wenigstens zwei Werkstücken (12) mittels Rührreibschweißen, aufweisend eine Sonde (16) zum Aufbringen von Reibungswärme auf die Werkstücke (12), wobei die Sonde (16) einen aus einem ersten Werkstoff (28) gebildeten ersten Sondenbereich (24) und einen aus einem zweiten Werkstoff (30) gebildeten zweiten Sondenbereich (26) umfasst,
wobei der erste Sondenbereich (24) einen Stützbereich (32) zum Abstützen der Sonde (16) während des Rührreibschweißens aufweist und wobei der zweite Sondenbereich (26) einen Reibbereich (34) zum Aufbringen von Reibungswärme auf die Werkstücke (12) aufweist, wobei der erste Sondenbereich (24) in einer sackförmigen Ausnehmung (56) des zweiten Sondenbereichs (26) angeordnet ist, und wobei der erste (24) und der zweite Sondenbereich (26) formschlüssig und/oder durch Diffusion der beiden Werkstoffe (28, 30) aneinander gehalten sind, **dadurch gekennzeichnet, dass** der erste Werkstoff (28) einen höheren E-Modul aufweist und höherfest ist als der zweite Werkstoff (30).

2. Schweißwerkzeug (10) nach Anspruch 1,
**dadurch gekennzeichnet, dass** der erste Werkstoff (28) mit Keramik (40) gebildet ist und dass der zweite Werkstoff (30) metallisch ist.

3. Schweißwerkzeug (10) nach Anspruch 2,
**dadurch gekennzeichnet, dass** der erste Werkstoff (28) mit Si₂N₄-Y₂O₃ oder mit ZrO₂-Y₂O₃ gebildet ist und dass der zweite Werkstoff einen metallischen Werkstoffverbund (42), insbesondere MP 159, umfasst.

4. Schweißwerkzeug (10) nach einem der Ansprüche 1 bis 3,
**dadurch gekennzeichnet, dass** der erste Werkstoff (28) einen höheren Wärmeausdehnungskoeffizienten aufweist als der zweite Werkstoff (30).

5. Schweißwerkzeug (10) nach einem der Ansprüche 1 bis 4,
**dadurch gekennzeichnet, dass** sich die Sonde (16) entlang einer Längsachse (20) des Schweißwerkzeugs (10) erstreckt und eine die Sonde (16) umschließende Schulter (18) zum Abtrennen eines Verbindungsbereichs (14) der Werkstücke (12) von einer Umgebung vorgesehen ist, wobei die Sonde (16) zum Rotieren um die Längsachse (20) antreibbar gelagert ist.

6. Schweißwerkzeug (10) nach einem der Ansprüche 1 bis 5,
**dadurch gekennzeichnet, dass** der erste (24) und der zweite Sondenbereich (26) rotationssymmetrisch um eine Längsachse (20) angeordnet sind, wobei sich der erste Sondenbereich (24) entlang der gesamten Längsachse (20) der Sonde (16) erstreckt oder wobei sich der erste Sondenbereich (24) in einem Teilbereich (50) entlang der Längsachse (20) erstreckt, insbesondere in einem Teilbereich (50), in dem die höchste Biegebelastung während des Rührreibschweißens zu erwarten ist.

7. Schweißwerkzeug (10) nach einem der Ansprüche 1 bis 6,
**dadurch gekennzeichnet, dass** der erste Sondenbereich (24) konisch ausgebildet ist.

8. Schweißwerkzeug (10) nach einem der Ansprüche 1 bis 7, **dadurch gekennzeichnet,**
**dass** der erste Werkstoff (28) einen um 20 % bis 50 % höheren E-Modul aufweist als der zweite Werkstoff (30).

9. Schweißwerkzeug (10) nach einem der Ansprüche 1 bis 8,
**dadurch gekennzeichnet, dass** mehrere erste Sondenbereiche (24) vorgesehen sind.

10. Schweißwerkzeug (10) nach einem der Ansprüche 1 bis 9,
**dadurch gekennzeichnet, dass** die Sonde (16) eine größere Längs-Erstreckungslänge als einen Durchmesser, insbesondere als einen Durchmesser von etwa 18 mm, aufweist und/oder dass die Sonde (16) und/oder der erste Sondenbereich (24) und/oder der zweite Sondenbereich (26) konisch oder zylinderförmig ausgebildet sind und/oder dass die Sonde (16) eine Mehrkant-Außengeometrie (54) und/oder ein Außengewinde (52) aufweist.

11. Schweißwerkzeug (10) nach einem der Ansprüche 1 bis 10,
**dadurch gekennzeichnet, dass** der zweite Werkstoff (30) wärmeleitend ist, um effektiv Reibungswärme auf die zu verbindenden Werkstücke (12) aufbringen zu können

12. Schweißwerkzeug (10) nach einem der Ansprüche 1 bis 12,
**dadurch gekennzeichnet, dass** der erste Sondenbereich (24) eine Riffelung und/oder Einkerbungen (62) und/oder eine Wellenform (58) und/oder eine Konturierung aufweist und/oder dass der erste (28) und der zweite Werkstoff (30) in einem Diffusionsbereich (66) der Sonde (16) ineinander diffundiert sind.

13. Verfahren zur Herstellung des Rührreib-Schweißwerkzeugs (10) nach einem der vorhergehenden Ansprüche mit
a) Bereitstellen des ersten Werkstoffes (28);
b) Bereitstellen des zweiten Werkstoffes (30); und
c) Bilden der Sonde (16), wobei der erste Werkstoff (28) in eine sackförmige Ausnehmung (56) des zweiten Werkstoffs (30) eingebracht wird und die Sonde (16) aus den beiden verschiedenen Materialien als Werkstoffverbund hergestellt wird, bei dem der erste (24) und der zweite Sondenbereich (26) formschlüssig und/oder durch Diffusion der beiden Werkstoffe (28, 30) aneinander gehalten sind.

14. Verfahren nach Anspruch 13,
**dadurch gekennzeichnet, dass** in Schritt c) die folgenden Schritte durchgeführt werden:
c1) Erhitzen des zweiten Werkstoffes (28);
c2) Umschließen des ersten Werkstoffes (28) mit dem zweiten Werkstoff (30); und
c3) gemeinsames Abkühlen des ersten (28) und zweiten Werkstoffes (30).

15. Verfahren nach einem der Ansprüche 13 oder 14,
**dadurch gekennzeichnet, dass** in Schritt a) der erste Werkstoff (28) vorgeformt wird und eine Konturierung und/oder eine Riffelung und/oder Einkerbungen (62) und/oder eine Wellenform (58) an der Vorform gebildet wird und/oder dass in Schritt c) die Sonde (16) mit erhöhtem Druck und/oder erhöhter Temperatur beaufschlagt wird.

## Claims

1. Welding tool (10) for connecting at least two workpieces (12) by means of friction stir welding, having a probe (16) for applying frictional heat to the workpieces (12), wherein the probe (16) comprises a first probe region (24) made from a first material (28) and a second probe region (26) made from a second material (30),
wherein the first probe region (24) has a support region (32) for supporting the probe (16) during the friction stir welding and wherein the second probe region (26) has a friction region (34) for applying frictional heat to the workpieces (12), wherein the first probe region (24) is arranged in a bag-like recess (56) in the second probe region (26), and wherein the first probe region (24) and the second probe region (26) are held against one another by a form fit and/or by diffusion of the two materials (28, 30), **characterized in that** the first material (28) has a higher modulus of elasticity and a higher strength than the second material (30).

2. Welding tool (10) according to Claim 1, **characterized in that** the first material (28) is made of ceramic (40) and **in that** the second material (30) is metallic.

3. Welding tool (10) according to Claim 2, **characterized in that** the first material (28) is made of Si₂N₄-Y₂O₃ or ZrO₂-Y₂O₃ and **in that** the second material comprises a metallic composite material (42), in particular MP 159.

4. Welding tool (10) according to one of Claims 1 to 3,
**characterized in that** the first material (28) has a higher coefficient of thermal expansion than the second material (30).

5. Welding tool (10) according to one of Claims 1 to 4,
**characterized in that** the probe (16) extends along a longitudinal axis (20) of the welding tool (10) and a shoulder (18) surrounding the probe (16) is provided for separating a connection region (14) of the workpieces (12) from the surroundings, wherein the probe (16) is mounted drivably for rotation about the longitudinal axis (20).

6. Welding tool (10) according to one of Claims 1 to 5,
**characterized in that** the first probe region (24) and the second probe region (26) are arranged rotationally symmetrically about a longitudinal axis (20), wherein the first probe region (24) extends along the entire longitudinal axis (20) of the probe (16) or wherein the first probe region (24) extends in a partial region (50) along the longitudinal axis (20), in particular in a partial region (50) in which the highest bending load during the friction stir welding is to be expected.

7. Welding tool (10) according to one of Claims 1 to 6,
**characterized in that** the first probe region (24) is conical.

8. Welding tool (10) according to one of Claims 1 to 7,
**characterized in that** the first material (28) has a 20% to 50% higher modulus of elasticity than the second material (30).

9. Welding tool (10) according to one of Claims 1 to 8,
**characterized in that** multiple first probe regions (24) are provided.

10. Welding tool (10) according to one of Claims 1 to 9,
**characterized in that** the probe (16) has a greater longitudinal extent than a diameter, in particular than a diameter of for instance 18 mm, and/or **in that** the probe (16) and/or the first probe region (24) and/or the second probe region (26) are/is conical or cylindrical, and/or **in that** the probe (16) has a polygonal external geometry (54) and/or an external thread (52).

11. Welding tool (10) according to one of Claims 1 to 10,
**characterized in that** the second material (30) is thermally conductive in order to be able to effectively apply frictional heat to the workpieces (12) to be connected.

12. Welding tool (10) according to one of Claims 1 to 12,
**characterized in that** the first probe region (24) has a corrugation and/or notches (62) and/or a wave shape (58) and/or a contouring and/or **in that** the first material (28) and the second material (30) are diffused into one another in a diffusion region (66) of the probe (16).

13. Method for producing the friction stir welding tool (10) according to one of the preceding claims, comprising the following steps:
a) providing the first material (28);
b) providing the second material (30); and
c) forming the probe (16), wherein the first material (28) is introduced into a bag-like recess (56) in the second material (30) and the probe (16) is produced from the two different materials as composite material, in the case of which the first probe region (24) and the second probe region (26) are held against one another by a form fit and/or by diffusion of the two materials (28, 30).

14. Method according to Claim 13,
**characterized in that**, in step c), the following steps are carried out:
c1) heating the second workpiece (28);
c2) enclosing the first material (28) with the second material (30); and
c3) cooling the first material (28) and the second material (30) together.

15. Method according to either of Claims 13 and 14, **characterized in that**, in step a), the first material (28) is preformed and a contouring and/or a corrugation and/or notches (62) and/or a wave shape (58) are/is formed on the preform and/or **in that**, in step c), the probe (16) is subjected to increased pressure and/or increased temperature.

## Revendications

1. Outil de soudage (10) pour relier au moins deux pièces (12) par soudage par friction-malaxage, présentant une sonde (16) pour appliquer de la chaleur de friction aux pièces (12), la sonde (16) comprenant une première zone de sonde (24) formée d'un premier matériau (28) et une deuxième zone de sonde (26) formée d'un deuxième matériau (30),
la première zone de sonde (24) présentant une zone de support (32) pour supporter la sonde (16) pendant le soudage par friction-malaxage, et la deuxième zone de sonde (26) présentant une zone de friction (34) pour appliquer de la chaleur de friction aux pièces (12), la première zone de sonde (24) étant agencée dans un évidement borgne (56) de la deuxième zone de sonde (26), et la première (24) et la deuxième zone de sonde (26) étant maintenues l'une contre l'autre par complémentarité de forme et/ou par diffusion des deux matériaux (28, 30), **caractérisé en ce que** le premier matériau (28) présente un module d'élasticité plus élevé et une résistance plus élevée que le deuxième matériau (30).

2. Outil de soudage (10) selon la revendication 1, **caractérisé en ce que** le premier matériau (28) est formé avec de la céramique (40) et **en ce que** le deuxième matériau (30) est métallique.

3. Outil de soudage (10) selon la revendication 2, **caractérisé en ce que** le premier matériau (28) est formé avec Si₂N₄-Y₂O₃ ou avec ZrO₂-Y₂O₃ et **en ce que** le deuxième matériau comprend un matériau composite métallique (42), notamment MP 159.

4. Outil de soudage (10) selon l'une quelconque des revendications 1 à 3, **caractérisé en ce que** le premier matériau (28) présente un coefficient de dilatation thermique plus élevé que le deuxième matériau (30).

5. Outil de soudage (10) selon l'une quelconque des revendications 1 à 4, **caractérisé en ce que** la sonde (16) s'étend le long d'un axe longitudinal (20) de l'outil de soudage (10) et un épaulement (18) entourant la sonde (16) est prévu pour séparer une zone de liaison (14) des pièces (12) d'un environnement, la sonde (16) étant montée de manière à pouvoir être entraînée pour la rotation autour de l'axe longitudinal (20).

6. Outil de soudage (10) selon l'une quelconque des revendications 1 à 5, **caractérisé en ce que** la première (24) et la deuxième zone de sonde (26) sont agencées à symétrie de rotation autour d'un axe longitudinal (20), la première zone de sonde (24) s'étendant le long de l'ensemble de l'axe longitudinal (20) de la sonde (16), ou la première zone de sonde (24) s'étendant dans une zone partielle (50) le long de l'axe longitudinal (20), notamment dans une zone partielle (50) dans laquelle la charge de flexion la plus élevée est attendue pendant le soudage par friction-malaxage.

7. Outil de soudage (10) selon l'une quelconque des revendications 1 à 6, **caractérisé en ce que** la première zone de sonde (24) est configurée sous forme conique.

8. Outil de soudage (10) selon l'une quelconque des revendications 1 à 7, **caractérisé en ce que** le premier matériau (28) présente un module d'élasticité supérieur de 20 % à 50 % à celui du deuxième matériau (30).

9. Outil de soudage (10) selon l'une quelconque des revendications 1 à 8, **caractérisé en ce que** plusieurs premières zones de sonde (24) sont prévues.

10. Outil de soudage (10) selon l'une quelconque des revendications 1 à 9, **caractérisé en ce que** la sonde (16) présente une longueur d'extension longitudinale supérieure à un diamètre, notamment à un diamètre d'environ 18 mm, et/ou **en ce que** la sonde (16) et/ou la première zone de sonde (24) et/ou la deuxième zone de sonde (26) sont configurées sous forme conique ou cylindrique et/ou **en ce que** la sonde (16) présente une géométrie extérieure polygonale (54) et/ou un filetage extérieur (52).

11. Outil de soudage (10) selon l'une quelconque des revendications 1 à 10, **caractérisé en ce que** le deuxième matériau (30) est conducteur de chaleur afin de pouvoir appliquer efficacement de la chaleur de friction aux pièces à relier (12).

12. Outil de soudage (10) selon l'une quelconque des revendications 1 à 12, **caractérisé en ce que** la première zone de sonde (24) présente une cannelure et/ou des entailles (62) et/ou une forme ondulée (58) et/ou un profilage et/ou **en ce que** le premier (28) et le deuxième matériau (30) sont diffusés l'un dans l'autre dans une zone de diffusion (66) de la sonde (16).

13. Procédé de fabrication de l'outil de soudage par friction-malaxage (10) selon l'une quelconque des revendications précédentes, comprenant :
a) la fourniture du premier matériau (28) ;
b) la fourniture du deuxième matériau (30) ; et
c) la formation de la sonde (16), le premier matériau (28) étant introduit dans un évidement borgne (56) du deuxième matériau (30) et la sonde (16) étant fabriquée à partir des deux matériaux différents en tant que matériau composite, dans lequel la première (24) et la deuxième zone de sonde (26) sont maintenues l'une contre l'autre par complémentarité de forme et/ou par diffusion des deux matériaux (28, 30).

14. Procédé selon la revendication 13, **caractérisé en ce qu'**à l'étape c), les étapes suivantes sont réalisées :
c1) le chauffage du deuxième matériau (28) ;
c2) l'enrobage du premier matériau (28) par le deuxième matériau (30) ; et
c3) le refroidissement conjoint du premier (28) et du deuxième matériau (30).

15. Procédé selon l'une quelconque des revendications 13 ou 14, **caractérisé en ce qu'**à l'étape a), le premier matériau (28) est préformé et un profilage et/ou une cannelure et/ou des entailles (62) et/ou une forme ondulée (58) sont formés sur la préforme et/ou **en ce qu'**à l'étape c), la sonde (16) est soumise à une pression élevée et/ou une température élevée.
